# EUROPÄISCHE PATENTSCHRIFT

(11) **EP 3 964 328 B1**
(45) Veröffentlichungstag und Bekanntmachung des Hinweises auf die Patenterteilung: **06.12.2023**
(21) Anmeldenummer: 20194899.9
(22) Anmeldetag: 07.09.2020
(51) Int. Cl.: B23Q 17/24, B23Q 17/09, B23Q 17/00

(54) **ÜBERPRÜFUNG EINES WERKZEUGS EINER WERKZEUGMASCHINE**
TESTING OF A TOOL OF A MACHINE TOOL
VÉRIFICATION D'UN OUTIL D'UNE MACHINE-OUTIL

(43) Veröffentlichungstag der Anmeldung: 09.03.2022
(73) Patentinhaber: SICK AG, 79183 Waldkirch (DE)
(72) Erfinder: Weber, Thomas, 77960 Seelbach (DE); Fritz, Kim, 79312 Emmendingen (DE); Krumm, Gerald, 79241 Ihringen (DE); Schröder, Robert, 79199 Kirchzarten (DE)

(56) Entgegenhaltungen:
- DE-A1-102014 109 399
- DE-B3-102012 111 723
- GB-A- 2 405 479

## Beschreibung

Die Erfindung betrifft einen Sensor und ein Verfahren zur Überprüfung eines Werkzeugs einer Werkzeugmaschine nach dem Oberbegriff von Anspruch 1 beziehungsweise 11.

Beispiele derartiger Werkzeugmaschinen sind spanende Bearbeitungsmaschinen wie Dreh- und Fräsmaschinen, in denen häufig ein Bohrer als Werkzeug eingespannt ist. Durch die Überprüfung des Werkzeugs wird automatisch eine Veränderung erkannt, vor allem ein Defekt.

Es ist bekannt, Bruch oder Beschädigung eines Bohrers mit taktilen oder optischen Sensoren zu erkennen. Für den Prüfvorgang wird die Messstation separat angefahren. Der Arm, der mit dem Werkzeug gearbeitet hat, muss folglich nach jedem Arbeitsschritt erst die Messstation anfahren, um die Messung am Werkzeug vorzunehmen, bevor er in seine Ausgangslage zurückkehren kann. Dieser zusätzliche Prozessschritt hat negative Auswirkungen auf die Zykluszeit der Maschine. Zudem benötigt jeder Sensoraufbau inklusive Messbereich Platz innerhalb des Bearbeitungsraumes der Maschine. Dieser Platz ist allerdings zum einen stark begrenzt und sollte zum anderen als Nutzraum dem zu bearbeitenden Werkstück vorbehalten bleiben.

Optische Prüfsysteme arbeiten unter erschwerten Umgebungsbedingungen. Innerhalb der Werkzeugmaschinen gibt es Spanablagerungen am Bohrkopf ebenso wie am Werkstück sowie Reste von Kühl- und Schmiermittel als Rückstand am Bohrer beziehungsweise durch den Bohrer und den Druck des Aufbringens innerhalb der Bearbeitungszelle verteilt. Diese Störungen wirken sich direkt auf die Messgenauigkeit sowie die Zuverlässigkeit der optischen Messung aus.

Die EP 2 915 627 B1 offenbart ein Lichtgitter zur Werkzeugkontrolle. Um eine besonders schnelle Kontrolle des Werkzeugs zu ermöglichen, sind die Strahlen des Lichtgitters einzelnen aktivierbar und somit an die konkrete Prüfung anpassbar. Das überwindet aber noch nicht die genannten Nachteile eines optischen Prüfsystems.

Ein weiterer Ansatz zur Überprüfung eines Werkzeugs misst den Energieverbrauch des Antriebs. Es ist jedoch schwierig, den Energieverbrauch in eine eindeutige Beziehung mit dem Zustand des Werkzeugs zu setzen. Außerdem variiert der Energieverbrauch während der Bearbeitung stark, auch wenn das Werkzeug nicht verändert ist.

Aus völlig anderen Anwendungen als der Überprüfung eines Werkzeugs ist das TDR-Messprinzip (time domain reflectometry) bekannt. Eine der ältesten Anwendungen des TDR-Prinzips ist die Lokalisierung von Brüchen in Überseeleitungen. Ein weiteres herkömmliches Einsatzgebiet ist die Bestimmung von Füllständen. Das TDR-Prinzip basiert auf der Bestimmung von Laufzeiten eines elektromagnetischen Pulses zur Bestimmung des Abstandes einer Diskontinuität des Leitungswellenwiderstandes wie etwa eines Kabelbruchs oder einer Produktgrenzfläche. Es ähnelt somit dem Radar, wobei der Unterschied darin besteht, dass die elektromagnetischen Wellen nicht ins Freie abgestrahlt, sondern entlang eines Leiters geführt werden.

Die DE 10 2014 109 399 1 offenbart einen Sensor für eine Rollenbahn, dessen Sensorelement in eine Rolle oder einen Rahmen der Rollenbahn integriert ist. Der Sensor speist ein Hochfrequenzsignal in das Sensorelement ein und empfängt es wieder, um dadurch Objekte auf der Rollenbahn zu detektieren. Dabei wird in einer Ausführungsform die Signallaufzeit zu dem Objekt gemessen.

Die GB 2 405 479 A befasst sich mit der Diagnose eines Telemetriesystems eines Abwärtsbohrers. In einer Ausführungsform werden Fehler des Telemetriesystems mit einer TDR-Box erkannt. Dafür werden Reflexionen der Sendepulse an offenen Stellen oder Kurzschlüssen erfasst.

Aus der DE 10 2012 111 723 B3 ist ein Verfahren zur Bestimmung von Abmessungen und/oder Positionsdaten eines Werkzeugs bekannt. Dazu wird von einer Induktivität ein Wechselsignal variabler Frequenz induktiv in das Werkzeug eingekoppelt.

Es ist vor diesem Hintergrund Aufgabe der Erfindung, eine verbesserte Überprüfung eines Werkzeugs anzugeben.

Diese Aufgabe wird durch einen Sensor und ein Verfahren zur Überprüfung eines Werkzeugs einer Werkzeugmaschine nach Anspruch 1 beziehungsweise 11 gelöst. Bei der Werkzeugmaschine kann es sich vorzugsweise um eine der einleitend genannten spanenden Bearbeitungsmaschinen, insbesondere eine CNC-Maschine handeln. Auch ein Roboterarm mit einem Werkzeug, eine Heimwerkermaschine wie eine Bohrmaschine oder ein Akkuschrauber und allgemein eine Maschine mit einem Werkzeug lässt sich als Werkzeugmaschine auffassen. Durch die Überprüfung des Werkzeugs soll in erster Linie festgestellt werden, ob ein Werkzeug beschädigt ist beziehungsweise es noch zur Bearbeitung eines Werkstücks geeignet ist. Das betrifft insbesondere einen Werkzeugbruch. Es kann aber auch anderes geprüft werden, etwa ob das richtige Werkzeug eingespannt ist und ob es richtig eingespannt ist.

Die Erfindung geht von dem Grundgedanken aus, das Werkzeug anhand der Laufzeit eines in dem Werkzeug laufenden Hochfrequenzsignals zu prüfen. Dazu wird insbesondere nach dem TDR-Messprinzip ein Hochfrequenzpuls verwendet, der auch ein Mehrfachpuls oder ein sonstiges Muster sein kann. Der Sensor weist einen Hochfrequenzsender und einen Hochfrequenzempfänger auf, um das Hochfrequenzsignal auszusenden und wieder zu empfangen. Hochfrequenzsender und Hochfrequenzempfänger können gemeinsam als Transceiver ausgebildet sein. Eine Koppeleinheit des Sensors koppelt das Hochfrequenzsignal in das Werkzeug ein und das zurückkehrende Hochfrequenzsignal aus dem Werkzeug aus. Die Kopplung kann je nach Ausführungsform indirekt sein, also zunächst in andere Elemente wie eine Werkzeugaufnahme erfolgen. Das Hochfrequenzsignal läuft von dem Hochfrequenzsender zur Koppelstelle, im Werkzeug zur Werkzeugspitze, zurück zur Koppelstelle und dann zu dem Hochfrequenzempfänger. Die dabei gemessene Laufzeit kann um konstante Anteile, wie die Signalwege von Hochfrequenzsender zu Koppelstelle und von Koppelstelle zu Hochfrequenzempfänger sowie einen Anteil der Werkzeuglänge von der Koppelstelle zu einer Werkzeugbasis in Gegenrichtung der Werkzeugspitze beispielsweise durch Kalibration bereinigt werden. Je nach Ausführungsform laufen weitere Signalteile nicht zur Werkzeugspitze und zurück, sondern zur Basis des Werkzeugs und womöglich in weitere Maschinenteile. Das sind Störanteile, die auszuwertende Laufzeit ist diejenige zur Werkzeugspitze.

In dieser Beschreibung und in den Ansprüchen wird davon gesprochen, dass das Hochfrequenzsignal in das Werkzeug eingekoppelt wird beziehungsweise in dem Werkzeug läuft. Tatsächlich dringt das Hochfrequenzsignal nicht notwendig in das Werkzeug ein, es handelt sich eher um eine Hochfrequenzwelle an der Oberfläche mit einer Eindringtiefe, die unter anderem von der Frequenz und dem Werkzeugmaterial abhängen kann. Auf diese sprachlichen und technischen Feinheiten soll es nicht ankommen, es soll ebenso ein Hochfrequenzsignal "auf" dem Werkzeug oder "in einer oberen Schicht des Werkzeugs" gemeint sein.

Die Erfindung hat den Vorteil, dass die einleitend genannten Nachteile überwunden werden. Das erfindungsgemäße Messprinzip ist deutlich robuster gegen typische Störungen durch Verunreinigungen im Umfeld einer Werkzeugmaschine als eine optische Erfassung. Da es keiner separaten Messstation bedarf, entfällt der Platzbedarf dafür. Der Sensor kann während des normalen Arbeitsablaufes das Werkzeug überprüfen, und so wird die Zykluszeit der Werkzeugmaschine nicht beeinträchtigt. Die Messung zum Überprüfen kann beispielsweise auf dem Verfahrweg zwischen zwei Bearbeitungsstellen erfolgen. Auch während der Bearbeitung selbst ist eine Messung denkbar. Dabei werden Reflexionen ausgewertet, die auftreten, wenn sich das Hochfrequenzsignal entlang des Werkzeugs ausbreitet und eine Impedanzänderung an der Stelle entsteht, bei der das Werkzeug in das Werkstück eindringt. Damit lässt sich die Anwesenheit des Werkstücks prüfen, und zumindest grob ist sogar im Sinne einer Qualitäts- oder Ablaufprüfung feststellbar, wie weit das Werkzeug bereits in das Werkstück eingedrungen ist.

Der Sensor weist erfindungsgemäß einen Ausgang zum Ausgeben einer aus der Laufzeit gewonnenen Längeninformation des Werkzeugs und/oder eine Anzeige zum Anzeigen einer aus der Laufzeit gewonnenen Längeninformation des Werkzeugs auf. Damit wird das Ergebnis der Messung zur Überprüfung des Werkzeugs außen für eine übergeordnete Steuerung beziehungsweise einen Anwender verfügbar.

Die Steuer- und Auswertungseinheit ist bevorzugt dafür ausgebildet, die gemessene Laufzeit mit einer erwarteten Laufzeit eines erwarteten Werkzeugs zu vergleichen und insbesondere ein Ergebnis des Vergleichs auszugeben oder anzuzeigen. In dieser Ausführungsform kennt der Sensor selbst die Erwartungen an das Werkzeug und kann statt oder neben der reinen Laufzeitinformation ein Prüfergebnis ausgeben. Die Erwartung kann sich auf einen Typ des Werkzeugs und vorzugsweise auf ein intaktes Werkzeug beziehen. Der Vergleich kann auf Ebene der Laufzeiten selbst oder einer davon abgeleiteten Größe wie beispielsweise der Werkzeuglänge erfolgen. Das Prüfergebnis kann binär sein, etwa ein OK oder eine Defekt-/Wartungsinformation. Es ist denkbar, ein Stoppsignal an die Werkzeugmaschine auszugeben, damit sie mit einem falschen oder defekten Werkzeug angehalten wird beziehungsweise gar nicht erst anläuft.

Das Werkzeug weist bevorzugt ein rotierendes Werkzeug auf, insbesondere einen Bohrer. Das ist ein sehr häufiger Anwendungsfall bei einer Werkzeugmaschine.

Die Koppeleinheit weist bevorzugt ein Koppelstück auf, das den Umfang des Werkzeugs und/oder einer Werkzeugaufnahme des Werkzeugs zumindest teilweise umgibt. Es handelt sich dabei insbesondere um ein ringförmiges oder teilringförmiges Koppelstück. Diese Formgebung des Koppelstücks ist besonders für die Einkopplung in ein rotierendes Werkzeug geeignet.

Die Koppeleinheit ist bevorzugt dafür ausgebildet, das Hochfrequenzsignal direkt in das Werkzeug einzukoppeln. Der Sensor kommt damit unmittelbar in Koppelkontakt mit dem Werkzeug. Dabei ist eine konduktive, induktive oder kapazitive Kopplung denkbar. Mit dieser Form der Kopplung ist eine Nachrüstung des Sensors in existierende Werkzeugmaschinen besonders einfach. Zu der Frage, ob das Hochfrequenzsignal in das Werkzeug oder nicht vielmehr nur auf dessen Oberfläche koppelt, wurden oben schon Ausführungen gemacht.

Die Koppeleinheit ist bevorzugt dafür ausgebildet, das Hochfrequenzsignal in eine Werkzeugaufnahme des Werkzeugs oder eine Welle der Werkzeugmaschine einzukoppeln. In dieser Ausführungsform erfolgt die Kopplung in das Werkzeug nur mittelbar über die Werkzeugaufnahme. Das Hochfrequenzsignal läuft dann von der Werkzeugaufnahme weiter ins Werkzeug. Bei einem rotierenden Werkzeug wie einem Bohrer ist die Werkzeugaufnahme mit der Welle verbunden und rotiert ebenfalls.

Die Steuer- und Auswertungseinheit ist bevorzugt dafür ausgebildet, bei der Bestimmung der Laufzeit ein zuvor aufgenommenes Referenzsignal zu berücksichtigen, insbesondere ein Referenzsignal, das für ein erwartetes Werkzeug aufgenommen wurde. Das erwartete Werkzeug ist wiederum insbesondere das richtige Werkzeug, das richtig eingespannt und intakt, damit einsatzfähig ist. Das Referenzsignal wird beispielsweise vorab in einem Speicher der Steuer- und Auswertungseinheit abgelegt. Anhand des Referenzsignals sind zumindest die wesentlichen Störeinflüsse bekannt. Dazu zählen Impedanzsprünge im Übergang zwischen freiem Werkzeugteil und von der Werkzeugaufnahme gehaltenem Werkzeugteil, sonstige Einflüsse durch das Werkzeug umgebende Maschinenteile und beispielsweise ein Echo von der Werkzeugbasis zusätzlich zu dem Nutzecho von der Werkzeugspitze. Um das Referenzsignal und damit diese Störeinflüsse zu berücksichtigen, kann beispielsweise vor der Laufzeitauswertung das Referenzsignal von dem Empfangssignal abgezogen werden. Das Referenzsignal kann auch vorverarbeitet sein, beispielsweise ein Nutzecho von der Werkzeugspitze daraus entfernt sein, da sonst womöglich im Betrieb durch Differenzbildung auch der gesuchte Messeffekt abgeschwächt würde.

In vorteilhafter Weiterbildung ist eine Werkzeugmaschine gemäß Anspruch 4 vorgesehen. Die möglichen Ausprägungen der Werkzeugmaschine wurden oben bereits diskutiert. Vorzugsweise ist der Sensor an der Maschine montiert, jedenfalls aber dessen Koppeleinheit mit mindestens mittelbarem Koppelkontakt zu dem Werkzeug angebracht, so dass das Hochfrequenzsignal in das Werkzeug hinein und aus dem Werkzeug heraus gelangt.

Die Werkzeugmaschine weist bevorzugt eine Isolation zwischen dem Werkzeug und einer Werkzeugaufnahme des Werkzeugs auf. In dieser Ausführungsform koppelt die Koppeleinheit direkt mit dem Werkzeug, denn das Hochfrequenzsignal käme von der Werkzeugaufnahme gegen die Isolation nicht ins Werkzeug. Das Werkzeug bildet den Innenleiter, die Werkzeugaufnahme und weitere Teile der Maschine den Außenleiter eines Koaxialleiters entsprechend einer Sonde eines TDR-Sensors. Isolation, Werkzeug und Sensor könnten in dieser Ausführungsform nachgerüstet werden.

Die Werkzeugmaschine weist bevorzugt eine Isolation um eine Werkzeugaufnahme des Werkzeugs gegenüber der übrigen Werkzeugmaschine auf. In dieser Ausführungsform koppelt die Koppeleinheit nur mittelbar über die Werkzeugaufnahme mit dem Werkzeug.

Voraussetzung ist demnach, dass die Werkzeugaufnahme eine leitende Verbindung zu dem Werkzeug herstellt, was aber für übliche Werkzeugaufnahmen ohnehin der Fall ist. Hier wird ein Koaxialleiter mit der Werkzeugaufnahme und in dessen Verlängerung dem Werkzeug als Innenleiter sowie der übrigen Maschine als Außenleiter realisiert.

Das erfindungsgemäße Verfahren wird vorzugsweise mit einem erfindungsgemäßen Sensor durchgeführt. An einer Koppelstelle wird ein Hochfrequenzsignal in das Werkzeug eingekoppelt und aus dem Werkzeug ausgekoppelt, wobei das Hochfrequenzsignal zwischen Einkopplung und Auskopplung zu einer Werkzeugspitze des Werkzeugs und zurückläuft und die Laufzeit des Hochfrequenzsignals bis zu der Werkzeugspitze bestimmt wird.

Die Bestimmung der Laufzeit wird vorzugsweise während des regelmäßigen Arbeitsablaufs der Werkzeugmaschine durchgeführt. Es ist demnach nicht erforderlich, dass das Werkzeug eine bestimmte Position oder einen bestimmten Betriebszustand einnimmt, um überprüft werden zu können, insbesondere muss es nicht eigens in eine Messstation überführt werden.

Die Bestimmung der Laufzeit erfolgt vorzugsweise in bestimmten Arbeitsphasen. Auch wenn das Werkzeug nicht eigens in einen für die Überprüfung geeigneten Zustand gebracht werden muss, ist es doch vorteilhaft, bestimmte Arbeitsphasen des ohnehin vorgesehenen Arbeitsablaufs der Werkzeugmaschine für die Überprüfung zu nutzen. Eine derartige Arbeitsphase ist, wenn das Werkzeug sich nicht in der Nähe eines Werkstücks, sondern möglichst frei im Raum befindet, sodass es kaum äußere Einflüsse auf die Messung gibt. Es kann aber auch umgekehrt vorteilhaft sein, Arbeitsphasen auszuwählen, in denen die Umgebung bestimmte Einflüsse auf die Messung hat. Das sind dann nach Möglichkeit wohldefinierte oder sogar die Überprüfung des Werkzeugs unterstützende Einflüsse. Es ist denkbar, vorab ein Referenzsignal für diese bekannte Umgebung aufzunehmen und bei der Bestimmung der Laufzeit zu berücksichtigen.

Die Bestimmung der Laufzeit erfolgt bevorzugt in einer Arbeitsphase, in der das Werkzeug mit einem Arbeitsmittel in Kontakt kommt, insbesondere in ein Arbeitsmittel eingetaucht oder damit versetzt wird. Dies ist ein Spezialfall einer Arbeitsphase mit einer bestimmten Umgebung des Werkzeugs. Das Arbeitsmittel kann beispielsweise das Werkzeug bearbeiten, nachschleifen oder ein von dem Werkzeug aufzunehmender Gegenstand wie eine Schraube sein. Besonders bevorzugt handelt es sich bei dem Arbeitsmittel um ein Kühl- beziehungsweise Schmiermittel. Ein solches Arbeitsmittel verändert die Dielektrizitätskonstante um das Werkzeug. Die entsprechenden Impedanzänderungen entlang des Ausbreitungswegs des Hochfrequenzsignals am Werkzeug lassen zusätzliche Echos und außerdem die veränderten dielektrischen Eigenschaften der Umgebung insgesamt eine Verzögerung des Hochfrequenzsignals und somit Verlängerung der Laufzeit erwarten. Damit lässt sich prüfen, ob das Werkzeug an den vorgesehenen Stellen mit Kühl- beziehungsweise Schmiermittel benetzt ist oder wird. Damit kann möglicherweise andere Sensorik zur Überwachung des Flusses des Kühl- beziehungsweise Schmiermittels entfallen, beziehungsweise es kann überprüft werden, ob das Kühl- beziehungsweise Schmiermittel an die richtige Stelle gespritzt wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung eines Sensors zur Werkzeugprüfung;
- Fig. 2: eine Schnittdarstellung einer Werkzeugaufnahme mit Werkzeug einer Werkzeugmaschine mit angekoppeltem Sensor zur Werkzeugprüfung;
- Fig. 3: eine Schnittdarstellung ähnlich Figur 2 mit anderer Werkzeugaufnahme und anderem Werkzeug;
- Fig. 4: eine schematische Darstellung der Ankopplung eines Sensors zur Werkzeugprüfung ans Werkzeug mittelbar über die Werkzeugaufnahme; und
- Fig. 5: eine schematische Darstellung ähnlich Figur 4 nun mit Ankopplung direkt ans Werkzeug.

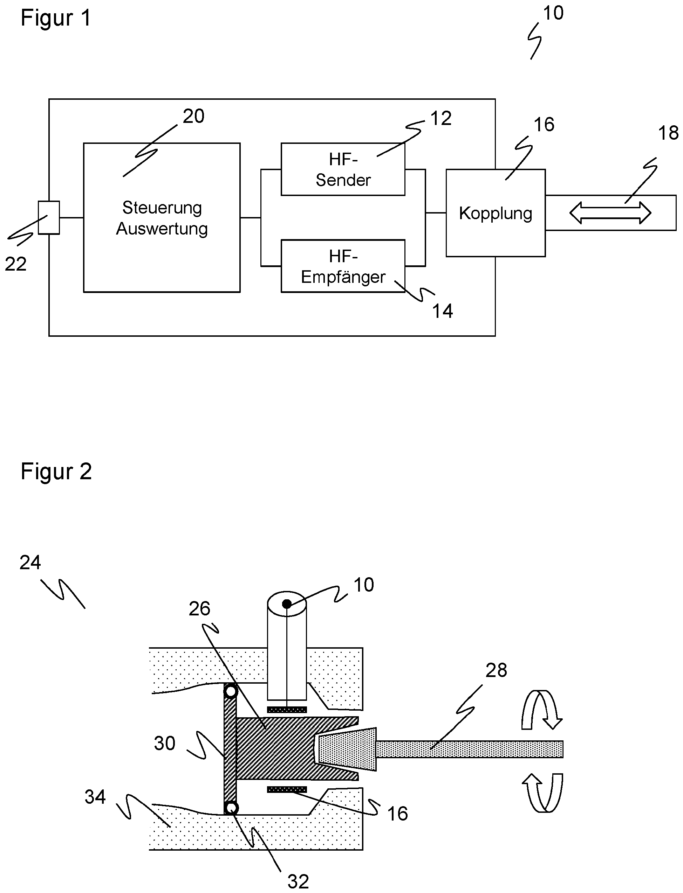

Figur 1 zeigt eine Blockdarstellung eines Sensors 10 zur Werkzeugprüfung. Der Sensor 10 weist einen Hochfrequenzsender 12 und einen Hochfrequenzempfänger 14 auf, die auch gemeinsam als Transceiver ausgebildet sein können. Hochfrequenzsender 12 und Hochfrequenzempfänger 14 sind mit einer Koppeleinheit 16 verbunden, um ein Hochfrequenzsignal auf die hier nur schematisch gezeigte Messstrecke 18 auszusenden und von dort zu empfangen. Eine Steuer- und Auswertungseinheit 20 erzeugt über den Hochfrequenzsender 12 Hochfrequenzsignale, insbesondere Hochfrequenzpulse, die nach ihrem Weg über die Messstrecke 18 von dem Hochfrequenzempfänger 14 in ein Empfangssignal gewandelt und dann ausgewertet werden.

Die Steuer- und Auswertungseinheit 20 misst auf diese Weise die Laufzeit des Hochfrequenzsignals und damit die Länge der Messstrecke 18 entsprechend dem an sich bekannten Prinzip der Zeitbereichsreflektometrie beziehungsweise dem TDR-Messprinzip. Dabei sind Auswertungsschritte denkbar, um die erfasste Laufzeit zu bereinigen, etwa um interne Signallaufzeiten, sowie mit Störungen oder Signalpulsen des Empfangssignals umzugehen, die nicht wie gewünscht vom vorgesehenen Ende der Messstrecke 18 stammen. Dazu wird beispielsweise vorab ein Referenzsignal in einer bekannten Umgebung aufgenommen und bei der Auswertung berücksichtigt, insbesondere durch Differenzbildung mit dem jeweiligen Empfangssignal.

Die Laufzeit oder eine daraus abgeleitete Größe kann an einem Ausgang 22 ausgegeben und/oder auf einer Anzeige angezeigt werden. Die Funktion des Sensors 10 ist die Überprüfung eines Werkzeugs, wenn also die Messstrecke 18 wenigstens teilweise ein Signalweg innerhalb eines Werkzeugs ist. Die Auswertung kann in diesem Fall einen Schritt weitergehen und prüfen, ob die Laufzeit oder eine daraus abgeleitete Größe, wie die Werkzeuglänge, einer Erwartung entspricht. Dann wird anstatt oder neben der Laufzeit an dem Ausgang 22 beziehungsweise auf der Anzeige das Ergebnis dieser Prüfung ausgegeben. Es ist vorzugsweise ein binäres Ergebnis, welches angibt, ob die Prüfung einen Defekt des Werkzeugs oder eine sonstige mögliche Fehlersituation, wie ein falsches eingespanntes Werkzeug oder ein nicht richtig eingespanntes Werkzeug ergeben hat. In einer bevorzugten Ausführungsform wirkt eine Prüfung, die das Werkzeug als nicht ordnungsgemäß erkannt hat, direkt auf eine Steuerung der Werkzeugmaschine ein und stoppt oder verweigert deren Betrieb.

Eine Herausforderung für den Sensor 10 ist die Ein- und Auskopplung des Hochfrequenzsignals in das Werkzeug beziehungsweise aus dem Werkzeug. Dies wird im Folgenden unter Bezugnahme auf die Figuren 2-5 neben weiteren vorteilhaften Ausgestaltungen der Erfindung erläutert.

Figur 2 zeigt eine sehr vereinfachende Schnittdarstellung eines Ausschnitts einer Werkzeugmaschine 24 mit einer Werkzeugaufnahme 26, in die ein Werkzeug 28 eingespannt ist. Von der Werkzeugmaschine 24 ist ansonsten nur eine Welle 30 mit Lagerung 32, mit der die Werkzeugaufnahme 26 und somit auch das eingespannte Werkzeug 28 rotiert, sowie ein kleiner Abschnitt eines Gehäuses 34 gezeigt. Die übrige Komplexität einer Werkzeugmaschine 24 ist nicht gezeigt, da die zahllosen Variationsmöglichkeiten in dieser Hinsicht zum Verständnis der Erfindung nicht beitragen.

Der Sensor 10 koppelt mit seiner Koppeleinheit 16 an die Werkzeugaufnahme 26. In Figur 2 ist ein Koaxialleiter angedeutet, dessen Innenleiter die Werkzeugaufnahme 26 und in deren Verlängerung das Werkzeug 28 und dessen Außenleiter die übrige Maschine wie das Gehäuse 34 bildet. Mit dem Bezugszeichen 10 des Sensors ist in Figur 2 nur rein funktional der Übergang zu dem beispielhaft in Figur 1 gezeigten Sensor 10 angedeutet. Physisch kann der Sensor 10 tatsächlich an der Werkzeugmaschine 24 montiert sein, sich aber auch woanders befinden. Werkzeugaufnahme 26 und Werkzeug 28 der Figur 2 bilden die Messstrecke 18 der Figur 1. Der fixe Laufzeitanteil von Laufwegen des Hochfrequenzsignals durch die Koppeleinheit 16 sowie die Werkzeugaufnahme 26 kann durch Kalibration oder sonstige Auswertung eliminiert werden, um die reine Laufzeit durch das Werkzeug 28 zu erhalten.

Anhand eines beispielhaft wie in Figur 2 mindestens mittelbar an das Werkzeug 28 angekoppelten Sensors 10 gemäß Figur 1 wird nun die erfindungsgemäße Werkzeugüberprüfung weiter erläutert. Dabei wird rein beispielhaft von einem Bruch des eingespannten Werkzeugs 28 gesprochen. Die Überprüfung funktioniert ganz analog auch dann, wenn es um andere Überprüfungen wie diejenige auf das richtige Werkzeug 28 oder dessen korrekte Lage und Verbindung mit und in der Werkzeugaufnahme 26 geht.

Durch den Bruch des eingespannten Werkzeuges 28 kommt es zu einer Längenänderung und damit einer Änderung in der gemessenen Laufzeit des Hochfrequenzsignals. Diese Messinformation kann als Laufzeit, Laufzeitänderung, Länge, Längenänderung oder sonstige abgeleitete Größe und bevorzugt in Form einer binären Meldung des Inhalts "in Ordnung" oder "defekt" weitergegeben werden, also einem binären Zustand für eine Prüfung ohne Auffälligkeit und dem anderen binären Zustand für eine Prüfung mit Auffälligkeit.

Um dies zu realisieren, wird von dem Sensor 10 ein Hochfrequenzsignal in die Werkzeugaufnahme 26 geleitet, das an der fernen Spitze des Werkzeugs 28 reflektiert wird. Werkzeugaufnahme 26 und Werkzeug 28 fungieren dabei quasi als Innenleiter einer Koaxialleitung. Das reflektierte Hochfrequenzsignal wird ausgekoppelt, in dem Sensor 10 erfasst, in ein Empfangssignal gewandelt und das Empfangssignal weiter ausgewertet. Die dabei gemessene Laufzeit wird bei einem Bruch des Werkzeugs 28 kürzer. Dies kann dann als Beschädigungsmeldung beziehungsweise Laufzeitänderung ausgegeben werden.

Die Kopplung zwischen der Koppeleinheit 16 und der Werkzeugaufnahme 26 ist vorzugsweise mit einer ringförmigen Anordnung oder zumindest mit einem Ringsegment umgesetzt, das eine ausreichende, hochfrequenztaugliche Kopplung zwischen Ring und drehender Werkzeugaufnahme 26 aufweist. Die Kopplung kann dabei je nach Ausführungsform konduktiv, induktiv oder kapazitiv erfolgen. Die Einkopplung sollte zudem in einem geschützten Bereich stattfinden, bei dem nach Möglichkeit keine Späne, Prozessflüssigkeiten oder sonstige störende Materialien aufgrund der Bearbeitung auftreten.

Das Hochfrequenzsignal wird sich unweigerlich auch in anderen Richtungen als nur zu der Spitze des Werkzeugs 28 ausbreiten. Ein Teil des Hochfrequenzsignals läuft in die Gegenrichtung zu der Welle 30. Dort kann die Lagerung 32 der Welle 30 einen Kurzschluss mit Totalreflexion bilden, oder die Welle 30 besitzt eine größere Ausdehnung als in Figur 2 angedeutet und passiert unterschiedliche umgebende Materialien mit Impedanzsprüngen, die Zwischenechos auslösen. Derartige unerwünschte Reflexionen treten auch auf dem Weg des Hochfrequenzsignals durch das Werkzeug 28 auf, etwa am Austritt des Werkzeugs 28 aus der umgebenden Maschine.

Durch derartige und weitere Störeinflüsse weist das Empfangssignal nicht nur das Nutzsignal von der Spitze des Werkzeugs 28 auf. Da aber die sonstigen Reflexionsstellen zumindest über eine gewisse Betriebszeit konstant sind, können Verfahren zur Ausblendung von statischen Störstellen zur Anwendung kommen. Vorzugsweise wird ein Empfangssignal in einer Referenzsituation als Referenzsignal aufgenommen und gespeichert, beispielsweise direkt nach dem Einspannen eines Werkzeugs 28, das von einem Fachmann als das korrekte Werkzeug 28, als intakt und als korrekt eingespannt geprüft wurde. Auf den Fachmann kann auch verzichtet werden, wenn einfach angenommen wird, dass das Werkzeug 28 zu Beginn der Bearbeitung in Ordnung ist. Bei späteren Messungen mit dem Werkzeug 28 wird das Referenzsignal berücksichtigt, beispielsweise aus dem jeweiligen Empfangssignal durch Differenzbildung mit dem Referenzsignal ein korrigiertes Empfangssignal erzeugt und weiterverarbeitet. Der Einfluss von statischen Störstellen wird auf diese Weise eliminiert oder doch zumindest reduziert.

In einer bevorzugten Ausführungsform wird ein Hochfrequenzpuls ausgesandt und die zeitliche Lage eines Nutzechos von der Spitze des Werkzeugs anhand dessen Schwerpunkt oder durch die Auswertung einer Flanke bestimmt. Die Störeinflüsse können weitere Echos einführen, die sich mit dem Nutzecho überlagern oder dessen Identifizierung erschweren. Der Einfluss von Störechos kann wie beschrieben mit einem Referenzsignal vermindert werden. Zudem kann die Einkopplung vorzugsweise so realisiert werden, dass Störechos und Nutzecho zeitlich voneinander getrennt sind.

Schon beim Einspannen und erstmaligen Vermessen eines Werkzeugs 28 kann durch eine Laufzeitmessung festgestellt werden, ob das Werkzeug 28 korrekt eingespannt ist beziehungsweise ob es sich um das richtige Werkzeug handelt, sofern der Sensor 10 eine entsprechende Erwartungshaltung an die Laufzeit kennt. Es lassen sich nicht beliebige Werkzeuge 28 eindeutig unterscheiden, da beispielsweise der Durchmesser keinen oder so gut wie keinen Einfluss auf die Laufzeit hat. Im Rahmen der Messauflösung werden jedoch anhand der Laufzeit schon viele Fehler in Bezug auf ein falsches Werkzeug 28 oder ein falsch eingespanntes Werkzeug 28 erkannt, um die Zuverlässigkeit der Werkzeugmaschine 24 zu verbessern.

Ein Vorteil der Erfindung besteht darin, dass die Überprüfung des Werkzeugs 28 in den normalen Arbeitsablauf der Werkzeugmaschine 24 integriert werden kann. Es ist nicht erforderlich, das Werkzeug 28 eigens für die Überprüfung in eine besondere Position oder wie herkömmlich zu einer gesonderten Messstation zu bringen. Dennoch werden vorzugsweise bestimmte Arbeitsphasen des normalen Arbeitsablaufs für die Überprüfung genutzt. Wenn sich beispielsweise das Werkzeug 28 in der Nähe einer Metallumgebung der Werkzeugmaschine 24 befindet, dann kann dies genutzt werden, um Hochfrequenzeinflüsse aus der Umgebung abzuschirmen, in dem gemessen wird, wenn sich das Werkzeug 28 in Bezug auf die Metallumgebung in einer günstigen Position befindet. Denkbar ist, eine Arbeitsphase für die Überprüfung zu nutzen, in der jegliche Gegenstände einen möglichst großen Abstand zu dem Werkzeug 28 haben.

Bei einer Werkzeugmaschine 24 ist es üblich, das Werkzeug 28 samt Werkzeugaufnahme 26 immer wieder mit einer Flüssigkeit, vorzugsweise Öl, in Kontakt zu bringen beziehungsweise dort einzutauchen. So wird das Werkzeug 28 mit Kühl- beziehungsweise Schmiermittel versorgt. Die Flüssigkeit verlangsamt die Ausbreitungsgeschwindigkeit des Hochfrequenzsignals deutlich. Das erlaubt zum einen eine verbesserte Messung mit geringeren zeitlichen Anforderungen. Außerdem ist damit gleich eine weitere Überprüfung denkbar, nämlich ob das Werkzeug 28 wie vorgesehen mit Kühl- beziehungsweise Schmiermittel versetzt wird.

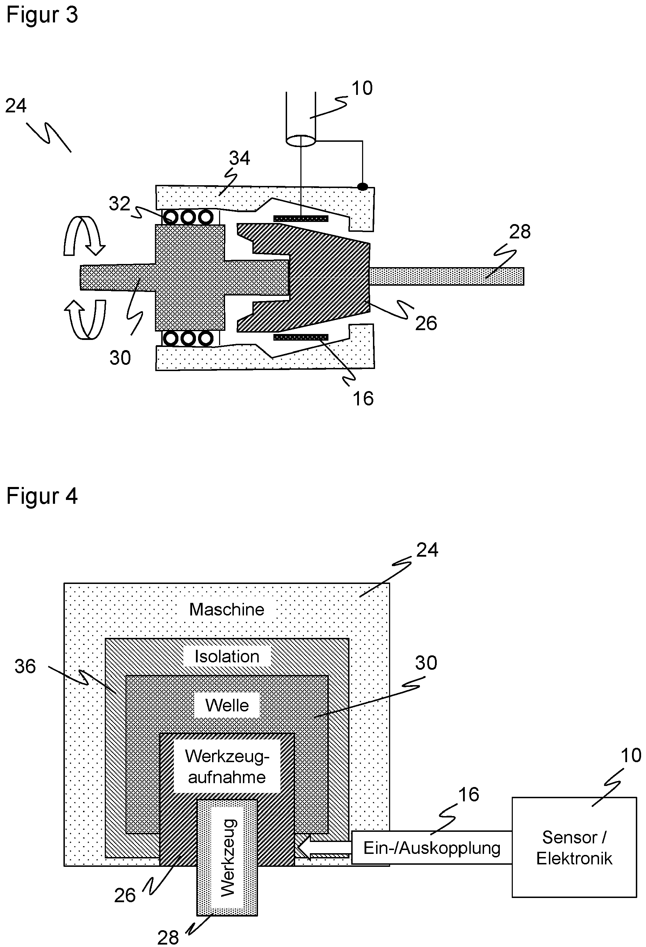

Figur 3 zeigt eine Schnittdarstellung ähnlich Figur 2 mit anderer Werkzeugaufnahme 26 und anderem Werkzeug 28. Damit soll noch einmal unterstrichen werden, dass die konkrete Ausgestaltung der Werkzeugmaschine 24, der Werkzeugaufnahme 26 mit Werkzeug 28 und der Koppeleinheit 16 zu dem Sensor 10 nur beispielhaft zu verstehen ist und variiert werden kann. In Figur 3 ist speziell eine getaperte oder angeschrägte Anordnung gewählt, die eine besonders reflexionsarme Einkopplung von Hochfrequenzsignalen ermöglicht und die Ausbreitung in die gewünschte Richtung zu dem Werkzeug 28 und dessen Spitze hin begünstigt. Allgemein ist die Erfindung aber weder eine bestimmte Werkzeugaufnahme 26, die beispielsweise als Morsekegel, Steilkegel oder Hohlschaftskegel ausgestaltet sein kann, noch auf bestimmte Werkzeuge 28 mit verschiedensten Längen, Durchmessern und Bohrköpfen beschränkt. Weder muss das Werkzeug 28 ein Bohrer sein, noch muss es rotieren.

Figur 4 zeigt die Werkzeugmaschine 24 mit deren Welle 30, Werkzeugaufnahme 26 und Werkzeug 28 sowie die Ankopplung über die Koppeleinheit 16 des Sensors 10 nochmals in abstrahierter Form. Wie schon in den bisherigen Ausführungsbeispielen wird das Hochfrequenzsignal in die Werkzeugaufnahme 26 eingekoppelt. Ebenso könnte eine Kopplung an die Welle 30 beziehungsweise den beweglichen oder rotierenden Teil der Werkzeugmaschine 24 erfolgen, da in aller Regel eine metallische und damit leitende Verbindung zu der Werkzeugaufnahme 26 besteht.

Vorzugsweise sollte nun aber der bewegliche Teil der Werkzeugmaschine 24, also insbesondere die Welle 30 mit der Werkzeugaufnahme 26, durch eine Isolation 36 von der übrigen Werkzeugmaschine 24 isoliert werden. Die Werkzeugaufnahme 26 und das Werkzeug 28 bilden dann wie gewünscht den Innenleiter eines Koaxialsystems und der durch die Isolation 36 davon getrennte umgebende Teil der Maschine den Außenleiter. Auf diese Weise kann die Laufzeit mit dem üblichen Vorgehen eines TDR-Messverfahrens bestimmt werden.

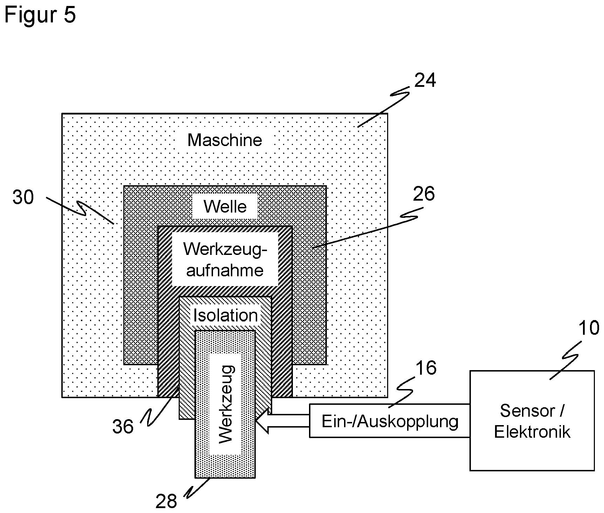

Figur 5 zeigt in einer abstrahierten Darstellung ähnlich Figur 4 eine weitere Ausführungsform der Erfindung. Hier erfolgt die Einkopplung direkt auf das Werkzeug 28 und nicht mittelbar über die Werkzeugaufnahme 26. Das Werkzeug 28 wird durch eine Isolation 36 von der Werkzeugaufnahme 26 isoliert. Dadurch ist ebenfalls ein Koaxialsystem realisiert, mit dem Werkzeug 28 als Innenleiter und der Werkzeugaufnahme 26 samt Welle 30 und dem umgebenden Teil der Maschine als Außenleiter. Hierdurch wird in gewisser Weise die Komplexität des Antriebsstrangs der Werkzeugmaschine 24 erhöht. Dafür ist eine Nachrüstbarkeit mit dem erfindungsgemäßen Sensor 10 zur Werkzeugkontrolle vereinfacht.

## Patentansprüche

1. Sensor (10) zur Überprüfung eines Werkzeugs (28) einer Werkzeugmaschine (24),
wobei der Sensor (10) einen Hochfrequenzsender (12) zum Erzeugen eines Hochfrequenzsignals, einen Hochfrequenzempfänger (14) zum Erzeugen eines Empfangssignals aus einem empfangenen Hochfrequenzsignal, eine Koppeleinheit (16), um ein Hochfrequenzsignal in das Werkzeug (28) einzukoppeln und aus dem Werkzeug (28) auszukoppeln, sowie eine Steuer- und Auswertungseinheit (20) aufweist, um eine Laufzeit eines von dem Hochfrequenzsender (12) ausgesandten und von dem Hochfrequenzempfänger (14) wieder empfangenen Hochfrequenzsignals anhand des Empfangssignals des Hochfrequenzempfängers (14) zu bestimmen, **gekennzeichnet durch** einen Ausgang (22) zum Ausgeben einer aus der Laufzeit gewonnenen Längeninformation des Werkzeugs (28) und/oder eine Anzeige zum Anzeigen einer aus der Laufzeit gewonnenen Längeninformation des Werkzeugs (28).

2. Sensor (10) nach Anspruch 1,
wobei die Steuer- und Auswertungseinheit (20) dafür ausgebildet ist, die gemessene Laufzeit mit einer erwarteten Laufzeit eines erwarteten Werkzeugs (28) zu vergleichen und insbesondere ein Ergebnis des Vergleichs auszugeben oder anzuzeigen.

3. Sensor (10) nach Anspruch 1 oder 2,
wobei die Steuer- und Auswertungseinheit (20) dafür ausgebildet ist, bei der Bestimmung der Laufzeit ein zuvor aufgenommenes Referenzsignal zu berücksichtigen, insbesondere ein Referenzsignal, das für ein erwartetes Werkzeug (28) aufgenommen wurde.

4. Werkzeugmaschine (24) mit einem Werkzeug (28) und mit einem Sensor (10) nach Anspruch 1.

5. Werkzeugmaschine (24) nach Anspruch 4,
wobei das Werkzeug (28) ein rotierendes Werkzeug, insbesondere einen Bohrer aufweist.

6. Werkzeugmaschine (24) nach Anspruch 4 oder 5,
wobei die Koppeleinheit (16) ein Koppelstück aufweist, das den Umfang des Werkzeugs (28) und/oder einer Werkzeugaufnahme (26) des Werkzeugs (28) zumindest teilweise umgibt.

7. Werkzeugmaschine (24) nach einem der Ansprüche 4 bis 6,
die eine Isolation (36) zwischen dem Werkzeug (28) und einer Werkzeugaufnahme (26) des Werkzeugs (28) aufweist.

8. Werkzeugmaschine (24) nach einem der Ansprüche 4 bis 6,
die eine Isolation (36) um eine Werkzeugaufnahme (26) des Werkzeugs (28) gegenüber der übrigen Werkzeugmaschine (24) aufweist.

9. Werkzeugmaschine (24) nach einem der Ansprüche 4 bis 8,
wobei die Koppeleinheit (16) dafür ausgebildet ist, das Hochfrequenzsignal direkt in das Werkzeug (28) einzukoppeln.

10. Werkzeugmaschine (24) nach einem der Ansprüche 4 bis 8,
wobei die Koppeleinheit (16) dafür ausgebildet ist, das Hochfrequenzsignal in eine Werkzeugaufnahme (26) des Werkzeugs (28) oder eine Welle (30) der Werkzeugmaschine (24) einzukoppeln.

11. Verfahren zur Überprüfung eines Werkzeugs (26) einer Werkzeugmaschine (24),
**dadurch gekennzeichnet,**
**dass**, insbesondere mit einem Sensor (10) nach einem der Ansprüche 1 bis 3, an einer Koppelstelle (16) ein Hochfrequenzsignal in das Werkzeug (28) eingekoppelt und aus dem Werkzeug (28) ausgekoppelt wird, wobei das Hochfrequenzsignal zwischen Einkopplung und Auskopplung zu einer Werkzeugspitze des Werkzeugs (28) und zurückläuft und die Laufzeit des Hochfrequenzsignals bis zu der Werkzeugspitze bestimmt wird.

12. Verfahren nach Anspruch 11,
wobei die Bestimmung der Laufzeit während des regelmäßigen Arbeitsablaufs der Werkzeugmaschine (24) durchgeführt wird.

13. Verfahren nach Anspruch 11 oder 12,
wobei die Bestimmung der Laufzeit in bestimmten Arbeitsphasen erfolgt, in denen das Werkzeug (28) sich nicht in der Nähe eines Werkstücks befindet und/oder in denen sich das Werkzeug (28) in einer bekannten Umgebung befindet, wobei insbesondere ein Referenzsignal für die bekannte Umgebung vorab aufgenommen und bei der Bestimmung der Laufzeit berücksichtigt wird.

14. Verfahren nach einem der Ansprüche 11 bis 13,
wobei die Bestimmung der Laufzeit in einer Arbeitsphase erfolgt, in der das Werkzeug (28) mit einem Arbeitsmittel in Kontakt kommt, insbesondere in ein Arbeitsmittel eingetaucht oder damit versetzt wird.

## Claims

1. A sensor (10) for checking a tool (28) of a machine tool (24), the sensor (10) comprising a high-frequency transmitter (12) for generating a high-frequency signal, a high-frequency receiver (14) for generating a received signal from a received high-frequency signal, a coupling unit (16) for coupling a high-frequency signal into the tool (28) and decoupling it from the tool (28), and a control and evaluation unit (20) for determining a time of flight of a high-frequency signal transmitted by the high-frequency transmitter (12) and received again by the high-frequency receiver (14) on the basis of the received signal of the high-frequency receiver (14),
**characterized by** an output (22) for outputting length information of the tool (28) obtained from the time of flight and/or a display for displaying length information of the tool (28) obtained from the time of flight.

2. The sensor (10) according to claim 1,
wherein the control and evaluation unit (20) is configured to compare the measured time of flight with an expected time of flight of an expected tool (28) and, in particular, to output or display a result of the comparison.

3. The sensor (10) according to claim 1 or 2,
wherein the control and evaluation unit (20) is configured to take into account a previously recorded reference signal, in particular a reference signal recorded for an expected tool (28), when determining the time of flight.

4. A machine tool (24) having a tool (28) and having a sensor (10) according to claim 1.

5. The machine tool (24) according to claim 4,
wherein the tool (28) comprises a rotating tool, in particular a drill.

6. The machine tool (24) according to claim 4 or 5,
wherein the coupling unit (16) comprises a coupling piece that at least partially surrounds the circumference of the tool (28) and/or a tool holder (26) of the tool (28).

7. The machine tool (24) according to any of claims 4 to 6,
comprising insulation (36) between the tool (28) and a tool holder (26) of the tool (28).

8. The machine tool (24) according to any of claims 4 to 6,
comprising an insulation (36) around a tool holder (26) of the tool (28) with respect to the rest of the machine tool (24).

9. The machine tool (24) according to any of claims 4 to 8,
wherein the coupling unit (16) is configured to couple the radio frequency signal directly into the tool (28).

10. The machine tool (24) according to any of claims 4 to 8,
wherein the coupling unit (16) is configured to couple the radio frequency signal into a tool holder (26) of the tool (28) or a shaft (30) of the machine tool (24).

11. A method for checking a tool (28) of a machine tool (24),
**characterized in that**, in particular using a sensor (10) according to any of claims 1 to 3, a high-frequency signal is coupled into the tool (28) at a coupling point (16) and is coupled out of the tool (28), wherein the high-frequency signal runs to a tool tip of the tool (28) and back between coupling in and coupling out, and the time of flight of the high-frequency signal up to the tool tip is determined.

12. The method according to claim 11,
wherein the determination of the time of flight takes place during the regular operation of the machine tool (24).

13. The method according to claim 11 or 12,
wherein the determination of the time of flight takes place in certain work phases in which the tool (28) is not located in the vicinity of a workpiece and/or in which the tool (28) is located in a known environment, wherein in particular a reference signal for the known environment is recorded in advance and taken into account in the determination of the time of flight.

14. The method according to any of claims 11 to 13,
wherein the determination of the time of flight takes place in a working phase in which the tool (28) comes into contact with a working means, in particular is immersed in or displaced with a working means.

## Revendications

1. Capteur (10) pour vérifier un outil (28) d'une machine-outil (24),
dans lequel le capteur (10) comprend un émetteur haute fréquence (12) pour générer un signal haute fréquence, un récepteur haute fréquence (14) pour générer un signal de réception à partir d'un signal haute fréquence reçu, une unité de couplage (16) pour coupler un signal haute fréquence dans l'outil (28) et le découpler de l'outil (28), ainsi qu'une unité de commande et d'évaluation (20) pour déterminer le temps de vol d'un signal haute fréquence émis par l'émetteur haute fréquence (12) et reçu à nouveau par le récepteur haute fréquence (14) à l'aide du signal de réception du récepteur haute fréquence (14),
**caractérisé par** une sortie (22) pour émettre une informations de longueur de l'outil (28) obtenue à partir du temps de vol et/ou un affichage pour afficher une information de longueur de l'outil (28) obtenue à partir du temps de vol.

2. Capteur (10) selon la revendication 1,
dans lequel l'unité de commande et d'évaluation (20) est configurée pour comparer le temps de vol mesuré avec un temps de vol attendu d'un outil attendu (28) et, en particulier, pour émettre ou afficher un résultat de la comparaison.

3. Capteur (10) selon la revendication 1 ou 2,
dans lequel l'unité de commande et d'évaluation (20) est configurée pour prendre en compte, lors de la détermination du temps de vol, un signal de référence enregistré au préalable, en particulier un signal de référence enregistré pour un outil attendu (28).

4. Machine-outil (24) avec un outil (28) et un capteur (10) selon la revendication 1.

5. Machine-outil (24) selon la revendication 4,
dans laquelle l'outil (28) comprend un outil rotatif, en particulier un foret.

6. Machine-outil (24) selon la revendication 4 ou 5,
dans laquelle l'unité de couplage (16) comprend une pièce de couplage qui entoure au moins partiellement la taille de l'outil (28) et/ou d'un porte-outil (26) de l'outil (28).

7. Machine-outil (24) selon l'une des revendications 4 à 6,
qui comprend une isolation (36) entre l'outil (28) et un porte-outil (26) de l'outil (28).

8. Machine-outil (24) selon l'une des revendications 4 à 6,
qui comprend une isolation (36) autour d'un porte-outil (26) de l'outil (28) par rapport au reste de la machine-outil (24).

9. Machine-outil (24) selon l'une des revendications 4 à 8,
dans laquelle l'unité de couplage (16) est configurée pour coupler le signal haute fréquence directement dans l'outil (28).

10. Machine-outil (24) selon l'une des revendications 4 à 8,
dans laquelle l'unité de couplage (16) est configurée pour coupler le signal de haute fréquence dans un porte-outil (26) de l'outil (28) ou un arbre (30) de la machine-outil (24).

11. Procédé pour vérifier un outil (28) d'une machine-outil (24),
**caractérisé en ce que**, en particulier avec un capteur (10) selon l'une des revendications 1 à 3, un signal haute fréquence est couplé dans l'outil (28) en un point de couplage (16) et est découplé de l'outil (28), dans lequel le signal haute fréquence se déroule entre le couplage et le découplage vers une pointe de l'outil (28) et en retour, et le temps de vol du signal haute fréquence jusqu'à la pointe de l'outil étant déterminé.

12. Procédé selon la revendication 11,
dans lequel la détermination du temps de vol est effectuée pendant le processus de travail régulier de la machine-outil (24).

13. Procédé selon la revendication 11 ou 12,
dans lequel la détermination du temps de vol s'effectue dans des phases de travail déterminées, où l'outil (28) ne se trouve pas à proximité d'une pièce à fabriquer et/ou où l'outil (28) se trouve dans un environnement connu, dans lequel en particulier un signal de référence pour l'environnement connu est enregistré au préalable et pris en compte lors de la détermination du temps de vol.

14. Procédé selon l'une des revendications 11 à 13,
dans lequel la détermination du temps de vol s'effectue dans une phase de travail dans laquelle l'outil (28) entre en contact avec un moyen de travail, en particulier est immergé dans un moyen de travail ou est déplacé avec celui-ci.
